# EUROPÄISCHE PATENTSCHRIFT

(11) **EP 2 742 679 B1**
(45) Veröffentlichungstag und Bekanntmachung des Hinweises auf die Patenterteilung: **10.08.2016**
(21) Anmeldenummer: 12732998.5
(22) Anmeldetag: 20.06.2012
(51) Int. Cl.: H04N 5/232

(54) **BILDERFASSUNGSVORRICHTUNG MIT MARKIERUNGSEINHEIT**
VIEW FINDER WITH MARKING UNIT
DISPOSITIF DE CAPTURE D'IMAGES AVEC UNITE DE MARQUAGE

(30) Priorität: 08.08.2011 DE 102011080582
(43) Veröffentlichungstag der Anmeldung: 18.06.2014
(73) Patentinhaber: Robert Bosch GmbH, 70442 Stuttgart (DE)
(72) Erfinder: KRAPF, Reiner, 70794 Filderstadt (DE)
(86) Internationale Anmeldenummer: PCT/EP2012/061804
(87) Internationale Veröffentlichungsnummer: WO 2013/020747

(56) Entgegenhaltungen:
- EP-A1- 1 638 048
- EP-A2- 2 197 199
- DE-A1-102004 049 872
- US-A- 5 808 678
- US-A1- 2005 168 594
- US-A1- 2009 268 047
- US-A1- 2010 125 812
- US-B1- 6 466 701

## Beschreibung

### Stand der Technik

Die vorliegende Erfindung betrifft eine Bilderfassungsvorrichtung mit einem Optikmodul zur Erfassung eines Bildes, mindestens einem Sensormodul zur Erzeugung von Bildsignalen für das erfasste Bild, einem Datenverarbeitungsmodul zur Erzeugung von Bilddaten für das erfasste Bild auf der Basis der erzeugten Bildsignale, einer Anzeigeeinrichtung zur Anzeige des erfassten Bildes auf der Basis der erzeugten Bilddaten, und einer zugeordneten Speichereinheit zum Speichern der erzeugten Bilddaten, wobei das Datenverarbeitungsmodul eine Markierungseinheit zur optischen Markierung von mindestens einer Bildposition in dem angezeigten Bild auf der Anzeigeeinrichtung aufweist.

Aus dem Stand der Technik sind derartige Bilderfassungsvorrichtungen bekannt, die z. B. als Digitalkameras ausgebildet sind und zur Fokussierung auf auswählbare Bildbereiche eines über ein zugeordnetes Optikmodul erfassten Bildes eine optische Markierung dieser Bildbereiche ermöglichen. Hierbei wird ein jeweils ausgewählter Bereich z. B. durch ein diesen Bereich umgreifendes Rechteck optisch markiert und das zugeordnete Optikmodul wird angesteuert, um den Fokus des erfassten Bildes auf diesen ausgewählten Bereich einzustellen.

Nachteilig am Stand der Technik ist, dass eine derartige optische Markierung lediglich bis zu einem entsprechenden Auslösen der Digitalkamera verfügbar ist und anschließend verworfen wird. Somit kann beispielsweise ein nachfolgend für den ausgewählten Bereich erfasstes, weiteres Bild, z. B. eine vergrößerte Detailansicht, nicht dem ausgewählten Bereich des zuvor erfassten Bildes, das z. B. ein Übersichtsbild darstellt, zugeordnet werden.

Aus der US 2005/0168594 A1 sind eine Digitalkamera und ein Verfahren zum Erzeugen von Panoramabildern bekannt. Die Vorrichtung der US 20kl510168594 A1 erlaubt es einem Anwender verschiedene Photos elektronisch zu überlappen, um zu einem Übersichtsbild zu kommen. Beim Verschwenken der Digitalkamera wird einem Anwender auf dem Display ein Teil des zuvor gemachten Photos eingeblendet, so dass der Anwender das nachfolgende Bild entsprechend ausrichten kann. Ein Bildverarbeitungsalgorithmus erkennt dann in beiden Bildern dieselben Muster und fügt die Bilder elektronisch zusammen.

US 2009/268047 A1, US 5 808 678 und US 6 466 701 B1 offenbaren weitere Systeme zur Markierung von Positionen oder Kennzeichnung von Bildinhalten in optischen Bildern, die jedoch keine Verknüpfung eines weiteren Bildes mit einem Übersichtsbild ermöglichen und nicht auf Wärmebilder anwendbar sind. Aus der EP 2 197 199 A2 ist eine Wärmebildkamera bekannt, die das sogenannte Alpha-Blending Verfahren benützt, bei dem einem Wärmebild ein optisches Bild zur besseren Orientierung überlagert wird. Diese Vorrichtung erlaubt jedoch keine optischen Markierungen mit Kennzeichnungen direkt im Wärmebild.

### Offenbarung der Erfindung

Eine Aufgabe der Erfindung ist es daher, eine neue Bilderfassungsvorrichtung bereitzustellen, die eine Verknüpfung eines in einem erfassten Bild ausgewählten Bereichs mit einem nachfolgend für diesen ausgewählten Bereich erfassten, weiteren Bildes ermöglicht.

Dieses Problem wird gelöst durch eine Bilderfassungsvorrichtung mit einem Optikmodul zur Erfassung eines Bildes, mindestens einem Sensormodul zur Erzeugung von Bildsignalen für das erfasste Bild, einem Datenverarbeitungsmodul zur Erzeugung von Bilddaten für das erfasste Bild auf der Basis der erzeugten Bildsignale, einer Anzeigeeinrichtung zur Anzeige des erfassten Bildes auf der Basis der erzeugten Bilddaten, und einer zugeordneten Speichereinheit zum Speichern der erzeugten Bilddaten. Das Datenverarbeitungsmodul weist eine Markierungseinheit zur optischen Markierung von mindestens einer Bildposition in dem angezeigten Bild auf der Anzeigeeinrichtung auf. Die Markierungseinheit ist dazu ausgebildet, auf der Anzeigeeinrichtung eine Anzeige mindestens eines Kennzeichnungselements zu bewirken, um eine Kennzeichnung der mindestens einen Bildposition zu ermöglichen. Das Kennzeichnungselement ist dazu ausgebildet, eine eindeutige Identifizierung der gekennzeichneten Bildposition zu ermöglichen.

Die Erfindung ermöglicht somit die Bereitstellung einer Bilderfassungsvorrichtung, bei der eine eindeutige, dauerhafte Kennzeichnung einer auswählbaren Bildposition in einem erfassten Bild erzeugbar ist, um eine Verknüpfung dieses erfassten Bildes mit mindestens einem weiteren erfassten Bild durch diese eindeutige Kennzeichnung zu ermöglichen.

Das Datenverarbeitungsmodul ist bevorzugt dazu ausgebildet, bei der Erfassung eines weiteren Bildes im Bereich der gekennzeichneten Bildposition dem weiteren Bild das Kennzeichnungselement zuzuweisen.

Somit können zwei unterschiedliche Bilder, zwischen denen ein Bezug besteht, sicher und zuverlässig miteinander verknüpft werden.

Bevorzugt repräsentiert das erfasste Bild ein Übersichtsbild und das weitere Bild ein Detailbild eines Ausschnitts des Übersichtsbilds.

Somit können auf einfache Art und Weise zwei unterschiedliche Bilder erfasst werden, zwischen denen ein Bezug besteht.

Gemäß einer Ausführungsform ist das Datenverarbeitungsmodul dazu ausgebildet, zur Verknüpfung des weiteren Bildes mit dem erfassten Bild zumindest das mindestens eine Kennzeichnungselement in Verbindung mit den erzeugten Bilddaten für das erfasste Bild und weiteren Bilddaten für das weitere Bild in der zugeordneten Speichereinheit abzuspeichern.

Die Erfindung ermöglicht somit eine unkomplizierte und effiziente Referenzierung der für das weitere Bild erzeugten weiteren Bilddaten durch die für das erfasste Bild erzeugten Bilddaten.

Bevorzugt ist das Datenverarbeitungsmodul dazu ausgebildet, Metadaten zur Verknüpfung des weiteren Bildes mit dem erfassten Bild in der zugeordneten Speichereinheit abzuspeichern.

Somit können zwei unterschiedliche Bilder sicher und zuverlässig über geeignete Metadaten miteinander verknüpft werden.

Gemäß einer Ausführungsform weist das Datenverarbeitungsmodul ein Datenverarbeitungselement auf, das dazu ausgebildet ist, die Markierungseinheit auf der Basis vorgegebener Kriterien anzusteuern, wobei die vorgegebenen Kriterien auf Bildparametern beruhen, die den erzeugten Bilddaten zugeordnet sind.

Die Erfindung ermöglicht somit die Bereitstellung einer Bilderfassungsvorrichtung, bei der die Markierungseinheit auf einfache Art und Weise ansteuerbar ist.

Das Datenverarbeitungselement ist bevorzugt dazu ausgebildet, die Bildparameter durch Mustererkennung zu bestimmen.

Somit kann eine automatische Bestimmung der zur Ansteuerung der Markierungseinheit erforderlichen Bildparameter ermöglicht werden.

Gemäß einer Ausführungsform ist die Markierungseinheit dazu ausgebildet, auf der Anzeigeeinrichtung eine Anzeige mindestens eines Markierungselements zur Markierung der mindestens einen Bildposition zu ermöglichen, wobei das Markierungselement nach Art eines Fadenkreuzes oder eines Markierungspunktes ausgebildet ist.

Die Erfindung ermöglicht somit die Bereitstellung einer Bilderfassungsvorrichtung, bei der eine Anzeige eines unkomplizierten und gut sichtbaren Markierungselements ermöglicht wird.

Bevorzugt ist eine Eingabeeinrichtung zur Verschiebung des Markierungselements auf der Anzeigeeinrichtung vorgesehen.

Somit kann das Markierungselement sicher und schnell auf der Anzeigeeinrichtung verschoben werden.

Bevorzugt ist mindestens ein Bedienelement zum Umschalten von einem Markierungsmodus in einen Bilderfassungsmodus vorgesehen.

Somit kann auf einfache Art und Weise zwischen dem Markierungs- und Bilderfassungsmodus umgeschaltet werden.

Gemäß einer Ausführungsform ist die Bilderfassungsvorrichtung nach Art einer Digitalkamera oder einer Wärmebildkamera ausgebildet.

Das Eingangs genannte Problem wird auch gelöst durch ein Verfahren zum Betrieb einer Bilderfassungsvorrichtung mit einem Optikmodul zur Erfassung eines Bildes, mindestens einem Sensormodul zur Erzeugung von Bildsignalen für das erfasste Bild, einem Datenverarbeitungsmodul zur Erzeugung von Bilddaten für das erfasste Bild auf der Basis der erzeugten Bildsignale, einer Anzeigeeinrichtung zur Anzeige des erfassten Bildes auf der Basis der erzeugten Bilddaten, und einer zugeordneten Speichereinheit zum Speichern der erzeugten Bilddaten. Auf der Anzeigeeinrichtung wird in dem angezeigten Bild mindestens eine Bildposition optisch markiert und mindestens ein Kennzeichnungselement wird zur Kennzeichnung der mindestens einen Bildposition angezeigt, das eine eindeutige Identifizierung der gekennzeichneten Bildposition ermöglicht. Bei einer Erfassung eines weiteren Bildes im Bereich der gekennzeichneten Bildposition wird dem weiteren Bild das Kennzeichnungselement zugewiesen, um eine Verknüpfung des weiteren Bildes mit dem erfassten Bild zu bewirken.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 ein schematisches Blockdiagramm einer Bilderfassungsvorrichtung gemäß einer Ausführungsform,
Fig. 2 eine schematische Ansicht eines mit der Bilderfassungsvorrichtung von Fig. 1 erfassten Übersichtsbildes,
Fig. 3 eine schematische Ansicht eines mit der Bilderfassungsvorrichtung von Fig. 1 erfassten, ersten Detailbildes in Bezug auf das Übersichtsbild von Fig. 2, und
Fig. 4 eine schematische Ansicht eines mit der Bilderfassungsvorrichtung von Fig. 1 erfassten, zweiten Detailbildes in Bezug auf das Übersichtsbild von Fig. 2.

### Beschreibung der Ausführungsbeispiele

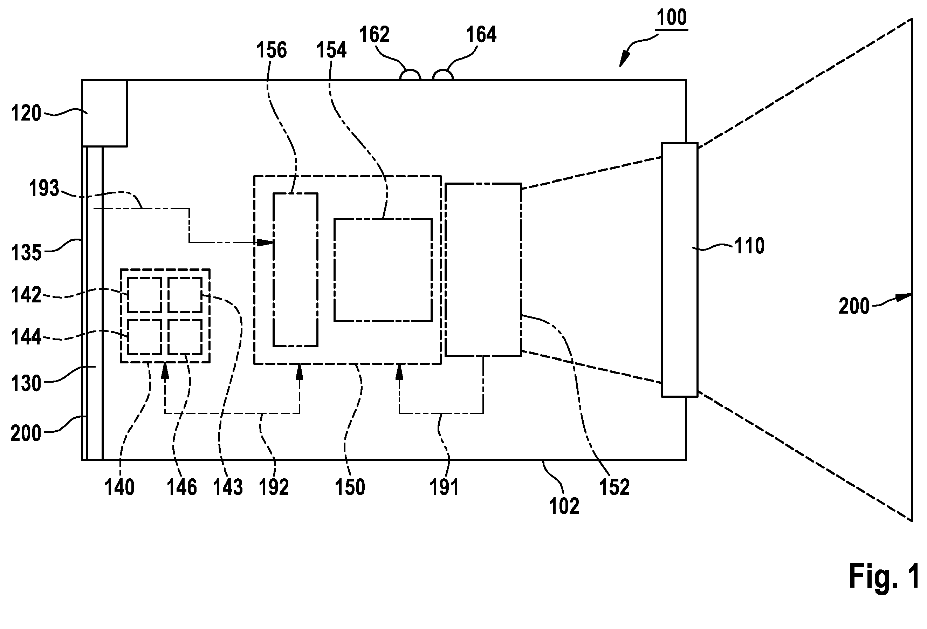

Fig. 1 zeigt eine beispielhafte Bilderfassungsvorrichtung 100, die gemäß einer Ausführungsform nach Art einer Digitalkamera oder einer Wärmebildkamera ausgebildet ist. Diese weist illustrativ ein Gehäuse 102 auf, an bzw. in dem mindestens ein Optikmodul 110, mindestens ein Sensormodul 152, mindestens ein Datenverarbeitungsmodul 150, mindestens eine zugeordnete Speichereinheit 140, mindestens eine Anzeigeeinrichtung 130 und mindestens ein und illustrativ zwei Bedienelemente 162, 164 sowie eine Eingabeeinrichtung 135 vorgesehen sind. Darüber hinaus kann an bzw. in dem Gehäuse 102 optional mindestens ein Sucher 120 vorgesehen sein.

Das Optikmodul 110 dient zur Erfassung eines Bildes 200. Hierzu kann das Optikmodul 110 ein Objektiv mit einer oder mehreren Linsen umfassen, durch die das Bild 200 zur Erfassung auf das Sensormodul 152 projiziert werden kann. Das Objektiv kann sowohl eine manuelle, als auch eine automatische Schärfen- und/oder Brennweiteneinstellung ermöglichen.

Zur Festlegung des zu erfassenden Bildes 200 kann der optionale Sucher 120 verwendet werden. Dieser kann hierzu eine separate Optik aufweisen. Darüber hinaus kann auch die Anzeigeeinrichtung 130 zur Festlegung des zu erfassenden Bildes 200 dienen.

Das Sensormodul 152 dient zur Erzeugung von Bildsignalen für das erfasste Bild 200. Hierzu kann das Sensormodul 152 einen oder mehrere zugeordnete CCD-(Charge-coupled device) Bildchips aufweisen, z. B. CCD-Bildchips mit einer Auflösung von weniger als 5 Megapixeln, falls die Bilderfassungsvorrichtung 100 nach Art einer Digitalkamera ausgebildet ist, oder von weniger als 64x64 Pixeln, falls die Bilderfassungsvorrichtung 100 nach Art einer Wärmebildkamera ausgebildet ist. Alternativ hierzu können auch andere geeignete Sensormodule bzw. Bildchips Anwendung finden.

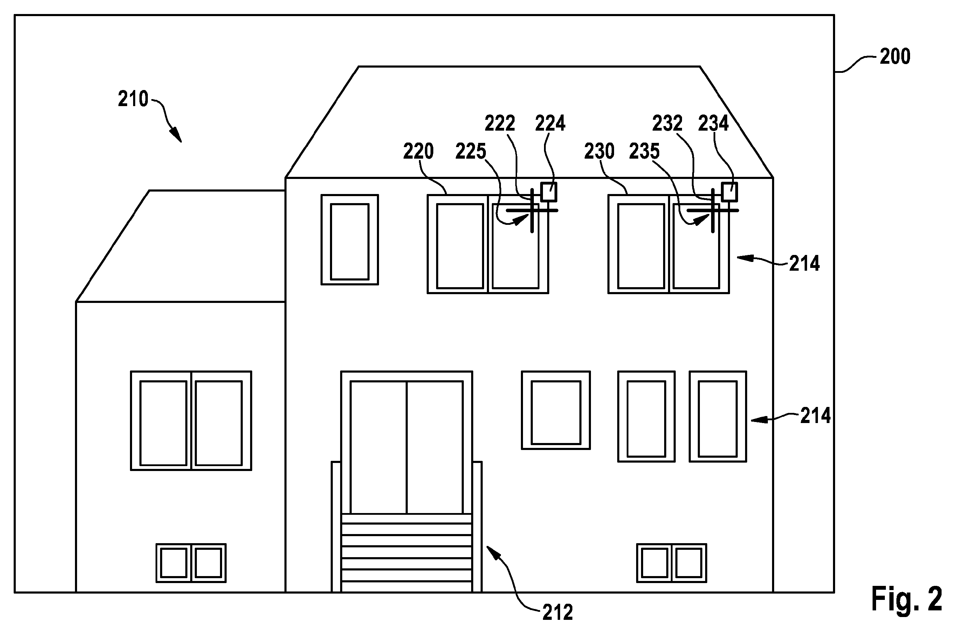

Das Datenverarbeitungsmodul 150 dient zur Erzeugung von Bilddaten 142 für das erfasste Bild 200 auf der Basis der erzeugten Bildsignale, die dem Datenverarbeitungsmodul 150 von dem Sensormodul 152 zugeführt werden, wie mit einem Pfeil 191 angedeutet. Die erzeugten Bilddaten 142 sind dazu ausgebildet, eine Anzeige des erfassten Bildes 200 auf der Anzeigeeinrichtung 130 zu ermöglichen und können in der zugeordneten Speichereinheit 140 gespeichert werden, wie mit einem Pfeil 192 angedeutet. Darüber hinaus können in der Speichereinheit 140 auch weitere Bilddaten 143, 144 und/oder Metadaten 146 gespeichert werden, wie unten bei Fig. 2 bis 4 beschrieben. Des Weiteren können die in der Speichereinheit 140 gespeicherten Bilddaten 142, 143, 144 und/oder Metadaten 146 auch aus dieser abgerufen werden, um sie z. B. zu einem beliebigen Zeitpunkt auf der Anzeigeeinrichtung 130 anzuzeigen oder an ein externes Datenverarbeitungsgerät, z. B. einen Computer, einen Laptop oder einen PDA, zu übertragen, wie ebenfalls mit dem Pfeil 192 angedeutet.

Illustrativ weist das Datenverarbeitungsmodul 150 ein Datenverarbeitungselement 154 und eine Markierungseinheit 156 auf und ist z. B. nach Art eines Mikrocontrollers ausgebildet. Die Markierungseinheit 156 dient zur optischen Markierung von mindestens einer Bildposition (225, 235 in Fig. 2) in dem angezeigten Bild 200 auf der Anzeigeeinrichtung 130. Hierbei ist die Markierungseinheit 156 bevorzugt dazu ausgebildet, auf der Anzeigeeinrichtung 130 eine Anzeige mindestens eines Markierungselements (222, 232 in Fig. 2) zur Markierung der mindestens einen Bildposition (225, 235 in Fig. 2) zu ermöglichen, wobei das Markierungselement (222, 232 in Fig. 2) z. B. nach Art eines Fadenkreuzes oder eines Markierungspunktes ausgebildet ist. Darüber hinaus ist die Markierungseinheit 156 dazu ausgebildet, auf der Anzeigeeinrichtung 130 eine Anzeige mindestens eines Kennzeichnungselements (224, 234 in Fig. 2) zu bewirken, um eine Kennzeichnung der mindestens einen Bildposition (225, 235 in Fig. 2) zu ermöglichen. Dieses Kennzeichnungselement (224, 234 in Fig. 2) ist dazu ausgebildet, eine eindeutige Identifizierung der gekennzeichneten Bildposition (225, 235 in Fig. 2) zu ermöglichen.

Das Datenverarbeitungselement 154 ist bevorzugt dazu ausgebildet, die Markierungseinheit 156 auf der Basis vorgegebener Kriterien anzusteuern. Diese vorgegebenen Kriterien können z. B. auf Bildparametern beruhen, die den erzeugten Bilddaten 142 zugeordnet sind, wobei die Bildparameter beispielsweise durch Mustererkennung bestimmbar sind. Geeignete Mustererkennungsverfahren sind dem Fachmann hinreichend bekannt, sodass hier zwecks Knappheit der Beschreibung auf eine eingehende Beschreibung derartiger Verfahren verzichtet werden kann. Darüber hinaus können die Bildparameter z. B. durch eine automatische Bestimmung entsprechender Bildstellen mit besonderen Eigenschaften ermittelt werden, die z. B. beschädigte Stellen oder Stellen mit unerwarteten bzw. übermäßigen Wärmeverlusten usw. kennzeichnen.

Die Eingabeeinrichtung 135 dient zur Verschiebung des Markierungselements (222, 232 in Fig. 2) auf der Anzeigeeinrichtung 130. Hierzu kann die Eingabeeinrichtung 135 z. B. das Datenverarbeitungsmodul 150 bzw. die Markierungseinheit 156 ansteuern, wie mit einem Pfeil 193 angedeutet. Illustrativ bildet die Eingabeeinrichtung 135 mit der Anzeigeeinrichtung 130 einen berührungsempfindlichen Bildschirm, einen sogenannten "Touchscreen". Es wird jedoch darauf hingewiesen, dass die Beschreibung eines Touchscreens lediglich beispielhaften Charakter hat und nicht als Einschränkung der Erfindung zu verstehen ist. Diese kann vielmehr auch mit zusätzlichen und/oder alternativen Eingabeeinrichtungen, wie z. B. Cursortasten, Rollrädern, Joysticks und/oder berührungsempfindlichen Steuerfeldern, sogenannten "Touchpads", ausgeführt werden.

Die Bedienelemente 162, 164 sind illustrativ als Drucktasten ausgeführt und dienen beispielhaft zum Umschalten von einem Markierungsmodus in einen Bilderfassungsmodus. Z. B. ist die Bilderfassungsvorrichtung 100 durch Betätigen der Drucktaste 162 in einen zugeordneten Bilderfassungsmodus umschaltbar und durch Betätigen der Drucktaste 164 in einen zugeordneten Markierungsmodus umschaltbar. Es wird jedoch darauf hingewiesen, dass die Beschreibung der beiden Bedienelemente 162, 164 und deren Ausführung als Drucktasten lediglich beispielhaften Charakter hat und nicht als Einschränkung der Erfindung zu verstehen ist. Vielmehr kann auch ein einzelner Schalter zur Umschaltung zwischen dem Markierungsmodus und dem Bilderfassungsmodus Anwendung finden oder eine Umschaltung unter Verwendung der Eingabeeinrichtung 135 ermöglicht werden. Darüber hinaus kann der Markierungsmodus z. B. auch durch ein Ausschalten der Bilderfassungsvorrichtung 100 beendet werden.

Die Funktionsweise der Bilderfassungseinrichtung 100 wird nachfolgend in Bezug auf die Fig. 2 bis 4 beispielhaft beschrieben.

Fig. 2 zeigt das mit der Bilderfassungsvorrichtung 100 von Fig. 1 im Bilderfassungsmodus erfasste und auf deren Anzeigeeinrichtung 130 angezeigte Bild 200, das beispielhaft eine Draufsicht auf eine Hausfassade 210 darstellt. Somit stellt das angezeigte Bild 200 ein Übersichtsbild über die Hausfassade 210 dar, die illustrativ einen Eingangsbereich 212 und eine Vielzahl von Fenstern 214 aufweist, von der beispielhaft nur zwei Fenster mit den Bezugszeichen 220 und 230 gekennzeichnet sind.

Gemäß einer Ausführungsform kann ein Benutzer der Bilderfassungsvorrichtung 100 nun z. B. durch Betätigen der Drucktaste 164 von Fig. 1 in den Markierungsmodus der Bilderfassungsvorrichtung 100 wechseln, um eine oder mehrere ausgewählte Bildpositionen in dem Übersichtsbild 200 zu markieren. Illustrativ markiert der Benutzer z. B. unter Verwendung der Eingabeeinrichtung 135 zwei Bildpositionen 225, 235 an den Fenstern 220 bzw. 230 mit zugeordneten Markierungselementen 222 bzw. 232.

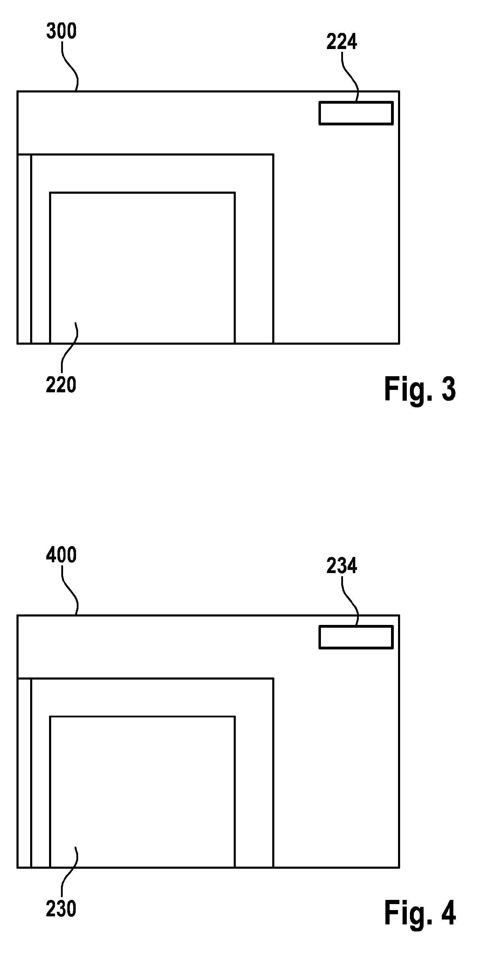

Falls die Bilderfassungsvorrichtung 100 nach Art einer Digitalkamera ausgebildet ist, kann der Benutzer die Bildpositionen 225, 235 markieren, um z. B. Schäden an den Fenstern 220, 230 in vergrößerten Detailansichten bzw. -bildern (300 in Fig. 3 und 400 in Fig. 4) dokumentieren zu können. Falls die Bilderfassungsvorrichtung 100 nach Art einer Wärmebildkamera ausgebildet ist, kann der Benutzer die Bildpositionen 225, 235 markieren, um z. B. Wärmeverluste an den Fenstern 220, 230 in vergrößerten Detailansichten bzw. -bildern (300 in Fig. 3 und 400 in Fig. 4) dokumentieren zu können. Alternativ hierzu können die Bildpositionen 225, 235 wie bei Fig. 1 beschrieben z. B. durch eine geeignete Mustererkennung von dem Datenverarbeitungselement 154 ermittelt und automatisch markiert werden.

Gemäß einer Ausführungsform wird jedem Markierungselement 222, 232 in dem Übersichtsbild 200 ein eindeutiges Kennzeichnungselement 224 bzw. 234 zugeordnet. Z. B. kann das dem beispielhaft als erstes gesetzten Markierungselement 222 zugeordnete Kennzeichnungselement 224 durch die Zahl "1" oder den Buchstaben "A" ausgebildet werden und das dem beispielhaft als zweites gesetzten Markierungselement 232 zugeordnete Kennzeichnungselement 234 durch die Zahl "2" oder den Buchstaben "B". Es wird jedoch darauf hingewiesen, dass diese Zahlen und Buchstaben lediglich beispielhaften Charakter haben und nicht als Einschränkung der Erfindung zu verstehen sind. Vielmehr können die Kennzeichnungselemente 224, 234 beliebig ausgeführt sein, solange diese wie bei Fig. 1 beschrieben dazu ausgebildet sind, eine eindeutige Identifizierung der jeweiligen Bildposition 225, 235 zu ermöglichen.

Die Markierungselemente 222, 232 und die zugeordneten Kennzeichnungselemente 224 bzw. 234 werden von dem Datenverarbeitungsmodul 150 von Fig. 1 in die für das Übersichtsbild 200 erzeugten Bilddaten 142 von Fig. 1 eingefügt oder zumindest in Verbindung mit diesen in der Speichereinheit 140 von Fig. 1 gespeichert. Somit kann bei Bedarf jederzeit auf diese Markierungselemente 222, 232 und die zugeordneten Kennzeichnungselemente 224 bzw. 234 zurückgegriffen werden.

Nach der Markierung der Bildpositionen 225, 235 kann der Benutzer z. B. durch Betätigen der Drucktaste 162 von Fig. 1 in den Bilderfassungsmodus der Bilderfassungsvorrichtung 100 wechseln, um ein weiteres Bild bzw. ein erstes Detailbild (300 in Fig. 3) im Bereich der markierten und gekennzeichneten Bildposition 225 und ein weiteres Bild bzw. ein zweites Detailbild (400 in Fig. 4) im Bereich der markierten und gekennzeichneten Bildposition 235 zu erfassen. Es wird jedoch darauf hingewiesen, dass die Beschreibung der Markierung und Kennzeichnung der Bildpositionen 225, 235 in dem Übersichtsbild 200 und eine nachfolgende Erfassung des ersten und zweiten Detailbilds (300 in Fig. 3 und 400 in Fig. 4) lediglich beispielhaften Charakter hat und nicht als Einschränkung der Erfindung zu verstehen ist. Vielmehr kann auch nach jeder Markierung einer ausgewählten Bildposition in einem entsprechenden Übersichtsbild zunächst ein zugeordnetes Detailbild erfasst werden, bevor eine weitere Markierung in das Übersichtsbild eingefügt wird oder eingefügt werden kann. Darüber hinaus können auch zunächst ein oder mehrere Detailbilder erfasst und anschließend entsprechende Bildpositionen in einem zugeordneten Übersichtsbild erzeugt werden. Des Weiteren können auch verschiedene Bedienelemente vorgesehen sein, um z. B. eine Umschaltung von einem Übersichtsbildmodus in einen Detailbildmodus zu ermöglichen usw.

Gemäß einer Ausführungsform kennzeichnet jedes der Markierungselemente 222, 232 etwa das Zentrum eines nachfolgend aufgenommenen Detailbilds. Alternativ hierzu sind auch weitere Varianten realisierbar, z. B. kann jedes der Markierungselemente 222, 232 jeweils die rechte obere oder linke untere Ecke eines nachfolgend aufgenommenen Detailbilds kennzeichnen, usw.

Fig. 3 zeigt ein beispielhaftes weiteres Bild 300, das illustrativ mit der Bilderfassungsvorrichtung 100 von Fig. 1 im Bereich der gekennzeichneten Bildposition 225 der Hausfassade 210 von Fig. 2 erfasst wurde und ein für diese Bildposition aufgenommenes Detailbild eines Ausschnitts des Übersichtsbilds 200 von Fig. 2 repräsentiert. Da wie bei Fig. 2 beschrieben das Markierungselement 222 von Fig. 2 etwa das Zentrum des Detailbildes 300 festlegt, ist das Fenster 220 in Fig. 3 nur abschnittsweise sichtbar.

Gemäß einer Ausführungsform weist das Datenverarbeitungsmodul 150 von Fig. 1 bei der Erfassung des Detailbildes 300 diesem das Kennzeichnungselement 224 zu, das der Bildposition 225 in Fig. 2 zugeordnet ist, da das Detailbild 300 z. B. als erstes nach dem Übersichtsbild 200 von Fig. 2 erfasst wurde. Hierzu erzeugt das Datenverarbeitungsmodul 150 Bilddaten für das Detailbild 300, z. B. die Bilddaten 143 von Fig. 1, in die das Kennzeichnungselement 224 eingefügt wird oder die mit diesem zusammen in der Speichereinheit 140 von Fig. 1 gespeichert werden, um somit das Detailbild 300 und das Übersichtsbild 200 von Fig. 2 miteinander zu verknüpfen.

Alternativ oder zusätzlich hierzu kann das Datenverarbeitungsmodul 150 wie bei Fig. 1 beschrieben Metadaten zur Verknüpfung des Detailbilds 300 mit dem Übersichtsbild 200 von Fig. 2 erzeugen, z. B. die Metadaten 146 von Fig. 1, und diese in der Speichereinheit 140 von Fig. 1 abspeichern. Derartige Metadaten erlauben z. B. eine Verknüpfung eines dem Detailbild 300 zugeordneten Dateinamens, Aufnahmedatums usw. oder eines diesem zugeordneten, beliebigen Indexes mit der Bildposition 225 im Übersichtsbild 200 von Fig. 2. Gemäß einer Ausführungsform werden die Metadaten in Verbindung mit einer sogenannten EXIF-Datei erzeugt bzw. in diesem Datenformat in der Speichereinheit 140 von Fig. 1 gespeichert.

Fig. 4 zeigt ein beispielhaftes weiteres Bild 400, das illustrativ mit der Bilderfassungsvorrichtung 100 von Fig. 1 im Bereich der gekennzeichneten Bildposition 235 der Hausfassade 210 von Fig. 2 erfasst wurde und ein für diese Bildposition aufgenommenes Detailbild eines Ausschnitts des Übersichtsbilds 200 von Fig. 2 repräsentiert. Da wie bei Fig. 2 beschrieben das Markierungselement 232 von Fig. 2 etwa das Zentrum des Detailbildes 400 festlegt, ist das Fenster 230 in Fig. 4 nur abschnittsweise sichtbar.

Gemäß einer Ausführungsform weist das Datenverarbeitungsmodul 150 von Fig. 1 bei der Erfassung des Detailbildes 400 diesem das Kennzeichnungselement 234 zu, das der Bildposition 235 in Fig. 2 zugeordnet ist, da das Detailbild 400 z. B. als zweites nach dem Übersichtsbild 200 von Fig. 2 erfasst wurde. Hierzu erzeugt das Datenverarbeitungsmodul 150 Bilddaten für das Detailbild 400, z. B. die Bilddaten 144 von Fig. 1, in die das Kennzeichnungselement 234 eingefügt wird oder die mit diesem zusammen in der Speichereinheit 140 von Fig. 1 gespeichert werden, um somit das Detailbild 400 und das Übersichtsbild 200 von Fig. 2 miteinander zu verknüpfen. Alternativ oder zusätzlich hierzu kann das Datenverarbeitungsmodul 150 wie bei Fig. 1 und 3 beschrieben Metadaten zur Verknüpfung des Detailbilds 400 mit dem Übersichtsbild 200 von Fig. 2 erzeugen, z. B. die Metadaten 146 von Fig. 1, und diese in der Speichereinheit 140 von Fig. 1 abspeichern.

Es wird darauf hingewiesen, dass das Detailbild 400 und das Detailbild 300 von Fig. 3 sich illustrativ lediglich durch die Kennzeichnungselemente 234 bzw. 224 von Fig. 3 voneinander unterscheiden. Somit wäre ohne diese Kennzeichnungselemente eine Unterscheidung dieser Detailbilder und deren eindeutige Zuordnung zu den Bildpositionen 235 bzw. 225 von Fig. 2 nicht möglich. Darüber hinaus wird darauf hingewiesen, dass die vorliegende Erfindung wie bei Fig. 1 beschrieben bevorzugt bei Digitalkameras oder Wärmebildkameras Anwendung finden kann, die CCD-Bildchips mit einer Auflösung von weniger als 5 Megapixeln bei einer Digitalkamera oder von weniger als 64x64 Pixeln bei einer Wärmebildkamera aufweisen. In diesen Fällen würde man bei einem gebräuchlichen "Hereinzoomen" in ausgewählte Bildpositionen des Übersichtsbilds 200 von Fig. 2 lediglich verschwommene und somit unbrauchbare Detailbilder erhalten, sodass eine erfindungsgemäße, gesonderte Aufnahme von Detailbildern erforderlich ist. Allerdings ist die vorliegende Erfindung auch bei Kameras mit größeren Auflösungen verwendbar.

Des Weiteren ist die vorliegende Erfindung auch nicht auf eine Verwendung bei Digitalkameras und Wärmebildkameras beschränkt, sondern kann bei einer Vielzahl unterschiedlicher Bilderfassungsvorrichtungen verwendet werden, z. B. in Mikroskopen. Darüber hinaus kann die Bilderfassungsvorrichtung der vorliegenden Erfindung auch bei einer Vielzahl weiterer, unterschiedlicher Anwendungen verwendet werden, z. B. bei Materialuntersuchungen zur Detektion bzw. Dokumentation von Rissen usw.

## Patentansprüche

1. Wärmebildkamera (100) mit einem Optikmodul (110) zur Erfassung eines Bildes (200), mindestens einem Sensormodul (152) zur Erzeugung von Bildsignalen für das erfasste Bild (200), einem Datenverarbeitungsmodul (150) zur Erzeugung von Bilddaten (142) für das erfasste Bild (200) auf der Basis der erzeugten Bildsignale, einer Anzeigeeinrichtung (130) zur Anzeige des erfassten Bildes (200) auf der Basis der erzeugten Bilddaten (142), und einer zugeordneten Speichereinheit (140) zum Speichern der erzeugten Bilddaten (142), wobei das Datenverarbeitungsmodul (150) eine Markierungseinheit (156) zur optischen Markierung von mindestens einer Bildposition (225, 235) in dem angezeigten Bild (200) auf der Anzeigeeinrichtung (130) aufweist, **dadurch gekennzeichnet, dass** die Markierungseinheit (156) dazu ausgebildet ist, auf der Anzeigeeinrichtung (130) eine Anzeige mindestens eines Kennzeichnungselements (224, 234) zu bewirken, um eine Kennzeichnung der mindestens einen Bildposition (225, 235) zu ermöglichen, wobei das Kennzeichnungselement (224, 234) dazu ausgebildet ist, eine eindeutige Identifizierung der gekennzeichneten Bildposition (225, 235) zu ermöglichen, wobei das Datenverarbeitungsmodul (150) dazu ausgebildet ist, bei der Erfassung eines weiteren Bildes (300; 400) im Bereich der gekennzeichneten Bildposition (225, 235) dem weiteren Bild (300, 400) das Kennzeichnungselement (224, 234) zuzuweisen, wobei das erfasste Bild (200) ein Übersichtsbild repräsentiert und das weitere Bild (300; 400) ein Detailbild eines Ausschnitts des Übersichtsbilds repräsentiert.

2. Wärmebildkamera nach Anspruch 1, **dadurch gekennzeichnet, dass** das Datenverarbeitungsmodul (150) dazu ausgebildet ist, zur Verknüpfung des weiteren Bildes (300; 400) mit dem erfassten Bild (200) zumindest das mindestens eine Kennzeichnungselement (224, 234) in Verbindung mit den erzeugten Bilddaten (142) für das erfasste Bild (200) und weiteren Bilddaten (143, 144) für das weitere Bild (300; 400) in der zugeordneten Speichereinheit (140) abzuspeichern.

3. Wärmebildkamera nach einem der Ansprüche 1 oder 2, **dadurch gekennzeichnet, dass** das Datenverarbeitungsmodul (150) dazu ausgebildet ist, Metadaten (146) zur Verknüpfung des weiteren Bildes (300; 400) mit dem erfassten Bild (200) in der zugeordneten Speichereinheit (140) abzuspeichern.

4. Wärmebildkamera nach einem der vorhergehenden Ansprüche, **dadurch gekennzeichnet, dass** das Datenverarbeitungsmodul (150) ein Datenverarbeitungselement (154) aufweist, das dazu ausgebildet ist, die Markierungseinheit (156) auf der Basis vorgegebener Kriterien anzusteuern, wobei die vorgegebenen Kriterien auf Bildparametern beruhen, die den erzeugten Bilddaten (142) zugeordnet sind.

5. Wärmebildkamera nach Anspruch 4, **dadurch gekennzeichnet, dass** das Datenverarbeitungselement (154) dazu ausgebildet ist, die Bildparameter durch Mustererkennung zu bestimmen.

6. Wärmebildkamera nach einem der vorhergehenden Ansprüche, **dadurch gekennzeichnet, dass** die Markierungseinheit (156) dazu ausgebildet ist, auf der Anzeigeeinrichtung (130) eine Anzeige mindestens eines Markierungselements (222, 232) zur Markierung der mindestens einen Bildposition (225, 235) zu ermöglichen, wobei das Markierungselement (222, 232) nach Art eines Fadenkreuzes oder eines Markierungspunktes ausgebildet ist.

7. Wärmebildkamera nach Anspruch 6, **dadurch gekennzeichnet, dass** eine Eingabeeinrichtung (135) zur Verschiebung des Markierungselements (222, 232) auf der Anzeigeeinrichtung (130) vorgesehen ist.

8. Wärmebildkamera nach einem der vorhergehenden Ansprüche, **dadurch gekennzeichnet, dass** mindestens ein Bedienelement (162, 164) zum Umschalten von einem Markierungsmodus in einen Bilderfassungsmodus vorgesehen ist.

9. Verfahren zum Betrieb einer Wärmebildkamera (100) mit einem Optikmodul (110) zur Erfassung eines Bildes (200), mindestens einem Sensormodul (152) zur Erzeugung von Bildsignalen für das erfasste Bild (200), einem Datenverarbeitungsmodul (150) zur Erzeugung von Bilddaten (142) für das erfasste Bild (200) auf der Basis der erzeugten Bildsignale, einer Anzeigeeinrichtung (130) zur Anzeige des erfassten Bildes (200) auf der Basis der erzeugten Bilddaten (142), und einer zugeordneten Speichereinheit (140) zum Speichern der erzeugten Bilddaten (142), **dadurch gekennzeichnet, dass** auf der Anzeigeeinrichtung (130) in dem angezeigten Bild (200) mindestens eine Bildposition (225, 235) optisch markiert wird und mindestens ein Kennzeichnungselement (224, 234) zur Kennzeichnung der mindestens einen Bildposition (225, 235) angezeigt wird, das eine eindeutige Identifizierung der gekennzeichneten Bildposition (225, 235) ermöglicht, wobei bei einer Erfassung eines weiteren Bildes (300; 400) im Bereich der gekennzeichneten Bildposition (225, 235) dem weiteren Bild (300, 400) das Kennzeichnungselement (224, 234) zugewiesen wird, um eine Verknüpfung des weiteren Bildes (300; 400) mit dem erfassten Bild (200) zu bewirken.

## Claims

1. Thermal imaging camera (100) having an optics module (110) for capturing an image (200), at least one sensor module (152) for generating image signals for the captured image (200), a data processing module (150) for generating image data (142) for the captured image (200) on the basis of the generated image signals, a display device (130) for displaying the captured image (200) on the basis of the generated image data (142), and an associated storage unit (140) for storing the generated image data (142), wherein the data processing module (150) has a marking unit (156) for optically marking at least one image position (225, 235) in the displayed image (200) on the display device (130), **characterized in that** the marking unit (156) is configured to bring about a display of at least one indication element (224, 234) on the display device (130) in order to permit indication of the at least one image position (225, 235), wherein the indication element (224, 234) is configured to permit unambiguous identification of the indicated image position (225, 235), wherein the data processing module (150) is configured to assign the indication element (224, 234) to a further image (300, 400) during capturing of the further image (300; 400) in the region of the indicated image position (225, 235), wherein the captured image (200) represents an overview image and the further image (300; 400) represents a detail image of a section of the overview image.

2. Thermal imaging camera according to Claim 1, **characterized in that** the data processing module (150) is configured to store in the assigned storage unit (140) at least the at least one indication element (224, 234) in connection with the generated image data (142) for the captured image (200) and further image data (143, 144) for the further image (300; 400) to link the further image (300; 400) to the captured image (200).

3. Thermal imaging camera according to either of Claims 1 and 2, **characterized in that** the data processing module (150) is configured to store metadata (146) in the assigned storage unit (140) for linking the further image (300; 400) to the captured image (200).

4. Thermal imaging camera according to one of the preceding claims, **characterized in that** the data processing module (150) has a data processing element (154) which is configured to drive the marking unit (156) on the basis of specified criteria, wherein the specified criteria are based on image parameters that are assigned to the generated image data (142).

5. Thermal imaging camera according to Claim 4, **characterized in that** the data processing element (154) is configured to determine the image parameters by way of pattern recognition.

6. Thermal imaging camera according to one of the preceding claims, **characterized in that** the marking unit (156) is configured to permit the display of at least one marking element (222, 232) for marking the at least one image position (225, 235) on the display device (130), wherein the marking element (222, 232) is configured in the manner of crosshairs or a marking dot.

7. Thermal imaging camera according to Claim 6, **characterized in that** an input device (135) is provided for displacing the marking element (222, 234) on the display device (130).

8. Thermal imaging camera according to one of the preceding claims, **characterized in that** at least one operating element (162, 164) is provided for switching from a marking mode into an image capturing mode.

9. Method for operating a thermal imaging camera (100) having an optics module (110) for capturing an image (200), at least one sensor module (152) for generating image signals for the captured image (200), a data processing module (150) for generating image data (142) for the captured image (200) on the basis of the generated image signals, a display device (130) for displaying the captured image (200) on the basis of the generated image data (142), and an assigned storage unit (140) for storing the generated image data (142), **characterized in that** at least one image position (225, 235) is optically marked on the display device (130) in the displayed image (200) and at least one indication element (224, 234) for indicating the at least one image position (225, 235) is displayed, which permits an unambiguous identification of the indicated image position (225, 235), wherein the indication element (224, 234) is assigned to a further image (300, 400) during capturing of the further image (300; 400) in the region of the indicated image position (225, 235) in order to effect linking of the further image (300; 400) to the captured image (200).

## Revendications

1. Caméra à infrarouge (100) comprenant un module optique (110) destiné à acquérir une image (200), au moins un module détecteur (152) destiné à générer des signaux d'image pour l'image (200) acquise, un module de traitement de données (150) destiné à générer des données d'image (142) pour l'image (200) acquise en se basant sur les signaux d'image générés, un dispositif d'affichage (130) destiné à afficher l'image (200) acquise en se basant sur les données d'image (142) générées, et une unité à mémoire (140) associée destinée à enregistrer les données d'image (142) générées, le module de traitement de données (150) possédant une unité de marquage (156) destinée au marquage optique d'au moins une position d'image (225, 235) dans l'image (200) affichée sur le dispositif d'affichage (130), **caractérisée en ce que** l'unité de marquage (156) est configurée pour provoquer sur le dispositif d'affichage (130) un affichage d'au moins un élément d'identification (224, 234) afin de permettre une identification de l'au moins une position d'image (225, 235), l'élément d'identification (224, 234) étant configuré pour permettre une identification explicite de la position d'image (225, 235) identifiée, le module de traitement de données (150) étant configuré pour, lors de l'acquisition d'une image supplémentaire (300, 400) dans la zone de la position d'image (225, 235), associer l'élément d'identification (224, 234) à l'image supplémentaire (300, 400), l'image (200) acquise représentant une image d'ensemble et l'image supplémentaire (300, 400) représentant une image détaillée d'un extrait de l'image d'ensemble.

2. Caméra à infrarouge selon la revendication 1, **caractérisée en ce que** le module de traitement de données (150) est configuré pour, en vue de lier l'image supplémentaire (300, 400) à l'image (200) acquise, enregistrer dans l'unité à mémoire (140) associée au moins l'au moins un élément d'identification (224, 234) en association avec les données d'image (142) générées pour l'image (200) acquise et des données d'image supplémentaires (143, 144) pour l'image supplémentaire (300, 400).

3. Caméra à infrarouge selon l'une des revendications 1 ou 2, **caractérisée en ce que** le module de traitement de données (150) est configuré pour enregistrer dans l'unité à mémoire (140) associée des métadonnées (146) en vue de lier l'image supplémentaire (300, 400) à l'image (200) acquise.

4. Caméra à infrarouge selon l'une des revendications précédentes, **caractérisée en ce que** le module de traitement de données (150) possède un élément de traitement de données (154) qui est configuré pour commander l'unité de marquage (156) sur la base de critères prédéfinis, les critères prédéfinis s'appuyant sur des paramètres d'image qui sont associés aux données d'image (142) générées.

5. Caméra à infrarouge selon la revendication 4, **caractérisée en ce que** l'élément de traitement de données (154) est configuré pour définir les paramètres d'image par reconnaissance de modèle.

6. Caméra à infrarouge selon l'une des revendications précédentes, **caractérisée en ce que** l'unité de marquage (156) est configurée pour permettre sur le dispositif d'affichage (130) un affichage d'au moins un élément de marquage (222, 232) destiné au marquage de l'au moins une position d'image (225, 235), l'élément de marquage (222, 232) étant réalisé sous la forme d'un réticule ou d'un point de marquage.

7. Caméra à infrarouge selon la revendication 6, **caractérisée en ce qu'**il existe un dispositif de saisie (135) destiné à coulisser l'élément de marquage (222, 232) sur le dispositif d'affichage (130).

8. Caméra à infrarouge selon l'une des revendications précédentes, **caractérisée en ce qu'**il existe au moins un élément de commande (162, 164) destiné à basculer entre un mode de marquage et un mode d'acquisition d'image.

9. Procédé pour faire fonctionner une caméra à infrarouge (100) comprenant un module optique (110) destiné à acquérir une image (200), au moins un module détecteur (152) destiné à générer des signaux d'image pour l'image (200) acquise, un module de traitement de données (150) destiné à générer des données d'image (142) pour l'image (200) acquise en se basant sur les signaux d'image générés, un dispositif d'affichage (130) destiné à afficher l'image (200) acquise en se basant sur les données d'image (142) générées, et une unité à mémoire (140) associée destinée à enregistrer les données d'image (142) générées, **caractérisé en ce qu'**au moins une position d'image (225, 235) est marquée optiquement sur le dispositif d'affichage (130) dans l'image (200) affichée et au moins un élément d'identification (224, 234) destiné à l'identification de l'au moins une position d'image (225, 235) est affiché, lequel permet une identification explicite de la position d'image (225, 235) identifiée, l'élément d'identification (224, 234), lors de l'acquisition d'une image supplémentaire (300, 400) dans la zone de la position d'image (225, 235) identifiée, étant associé à l'image supplémentaire (300, 400) afin de provoquer un lien de l'image supplémentaire (300, 400) avec l'image (200) acquise.
